# EUROPÄISCHE PATENTSCHRIFT

(11) **EP 0 705 419 B1**
(45) Veröffentlichungstag und Bekanntmachung des Hinweises auf die Patenterteilung: **15.01.1997**
(21) Anmeldenummer: 94901836.0
(22) Anmeldetag: 22.11.1993
(51) Int. Cl.: G01B 5/00, B60T 17/22, F16D 66/02

(54) **VERFAHREN UND EINRICHTUNG ZUR VERSCHLEISSMESSUNG AN LAMELLENBREMSEN**
PROCESS AND ARRANGEMENT FOR MEASURING MULTIPLE DISK BRAKE WEAR
PROCEDE ET DISPOSITIF PERMETTANT DE MESURER L'USURE DE FREINS MULTIDISQUES

(30) Priorität: 26.11.1992 DE 4239688; 11.11.1993 DE 4338468
(43) Veröffentlichungstag der Anmeldung: 10.04.1996
(73) Patentinhaber: O&K ORENSTEIN & KOPPEL AG, 13581 Berlin (DE)
(72) Erfinder: SCHMIDT, Thomas, D-91154 Roth (DE); BULIKEWITZ, Siegfried, D-91207 Lauf (DE); REISINGER, Helmut, D-90475 Nürnberg (DE)
(86) Internationale Anmeldenummer: EP9303264
(87) Internationale Veröffentlichungsnummer: WO9412849

(56) Entgegenhaltungen:
- DE-A- 2 734 786
- DE-A- 3 216 401
- DE-A- 3 606 876
- GB-A- 2 024 345

## Beschreibung

Die Erfindung betrifft ein Verfahren zur Verschleißmessung an naßlaufenden Lamellenbremsen von Achsen mit Planetenradvorgelegen, indem ein in eine vorgegebene Bohrung in der jeweiligen Radnabe angeordnetes Verschlußelement durch ein mit einer Meßeinrichtung zusammenwirkendes schraubenartiges Bauteil ersetzt wird.

Lamellenbremsen, insbesondere ölgeschmierte Lamellenbremsen, stellen Bauteile dar, die zwar einem relativ geringen Verschleiß unterliegen, wobei jedoch dennoch seitens der Technischen Überwachungsvereine Forderungen aufgestellt werden, die eine zumindest sporadische Verschleißmessung, insbesondere in den Wartungsintervallen, bedingen.

Bekannt ist bei Achsen, die Ölablaßschraube herauszudrehen und eine Meßvorrichtung einzuschrauben, wobei die Meßvorrichtung mittels einer Konterschraube gegen Verdrehen gesichert wird. Die Meßvorrichtung selber ist als Schraube ausgebildet, die exzentrisch innerhalb der die ölablaßschraube ersetzenden Schraube vorgesehen ist. Diese exzentrisch angeordnete Schraube wird in Richtung der die Lamellen stützenden Scheibe zugestellt, wobei das Rad anschließend in Umfangsrichtung gedreht wird, um auf diese Art und Weise eine Verkantung der Scheibe zu vermeiden. Mittels eines Tiefenmaßes wird der Abstand zwischen der Stirnfläche der Radnabe und dem Schraubenkopf festgestellt. Nachteilig an diesen Verfahren bzw. der Einrichtung ist festzustellen, daß einerseits die die Ölablaßschraube ersetzende Schraube in aufwendiger Weise bearbeitet werden muß, um die exzentrisch angeordnete Schraube aufzunehmen. Die Exzentrizität ist deshalb notwendig, damit die Meßschraube in Richtung der die Lamellen stützenden Scheibe zugestellt werden kann, wobei aus Sicherheitsgründen auch noch eine Drehung des Rades vorgenommen werden muß, um eine Verkantung der Scheibe auszuschließen.

Die GB-A 2 024 345 betrifft eine aus einer Vielzahl von Lamellen bestehende Scheibenbremse, bei welcher ohne das Lamellenpaket zu demontieren, eine Verschleißmessung durchgeführt werden kann. Zum Einsatz gelangt hierbei eine Tiefenmeßeinrichtung, die in eine durch ein Verschlußelement verschließbare Öffnung in der Radnabe eingeführt wird. Die Messung dient hierbei dem Zweck, einen Vergleich zwischen dem aktuellen Meßwert und einem auf der Radnabe aufgedruckten Grenzwert durchzuführen, um auf diese Weise festzustellen, ob ein Austausch des Lamellenpaketes notwendig ist. Die zum Einsatz gelangende Tiefenmeßeinrichtung sitzt hierbei auf einer Fläche an der Radnabe auf, während die Meßeinrichtung in die Öffnung solange eingebracht wird, bis sie an einer vorgegebenen Gegenfläche zur Anlage kommt, und zwar bei betätigter Bremse. Da mit Ausnahme der Anlagefläche der Tiefenmeßeinrichtung auf der Radnabe keine weitere definierte Führung der Meßeinrichtung gegeben ist, können Verkantungen derselben zu Meßwertverfälschungen führen.

Der DE-A 36 06 876 ist ein Radnabengetriebe mit Haltebremse in Lamellenbauweise zu entnehmen, bei welchem an dem außenseitigen Deckelteil eine zentrale Belüftungsschraube angeordnet ist. In die Ausnehmung zum Einsetzen der Belüftungsschraube ist ein Längenmeßinstrument zur Feststellung des Abnutzungsgrades der Lamellen der Haltebremse einsetzbar. Da hier ein zur GB-A 2 024 345 analoges Meßverfahren gegeben ist, gelten auch hier die gleichen vorab aufgeführten Nachteile.

Ziel des Erfindungsgegenstandes ist es, ein Verfahren zur Verschleißmessung an Lamellenbremsen sowie eine danach arbeitende Einrichtung zu konzipieren, mit welcher die Verschleißmessung ohne größeren Aufwand realisiert werden kann, wobei die Meßeinrichtung einfach im Aufbau und für verschiedene Anwendungsfälle ausgelegt sein soll.

Dieses Ziel wird verfahrensgemäß erreicht durch eine mit der Meßeinrichtung zusammenwirkende Spindel, die nach dem Betätigen der Bremse ohne weitere Drehung der Radnabe bis zur die Lamellen axial abstützenden Scheibe zugestellt und dieser Abstand als erster Meßwert festgestellt wird, und anschließend die Bremse wieder gelöst und die Spindel solange weiter zugestellt wird, bis sie erneut an der Scheibe zur Anlage kommt und dieser Abstand als zweiter Meßwert festgestellt wird, wobei die Differenz der beiden Meßwerte den Kolbenhub ergibt, aus welchem der Verschleiß ermittelt wird.

Der Verschleiß, d.h. der relevante Kolbenhub kann in Abhängigkeit vom konstruktiven Aufbau der Einrichtung einerseits unmittelbar an der Spindel abgelesen und andererseits durch das Tiefenmaß eines von außen anzusetzenden Meßschiebers ermittelt werden.

Eine nach diesem Verfahren arbeitende Einrichtung ist dadurch gekennzeichnet, daß die Spindel konzentrisch innerhalb des schraubenartigen Bauteils beweglich geführt ist, eine vorgegebene Gewindesteigung aufweist und in einen verkantungsfreien Bereich der Scheibe zustellbar ist.

Eine alternativ nach dem erfindungsgemäßen Verfahren arbeitende Einrichtung ist dadurch gekennzeichnet, daß die Spindel durch das schraubenartige Bauteil gebildet ist, die an ihrem der Scheibe zugewandten Ende mit einem konzentrisch angeordneten Stift zusammenwirkt, der zusammen mit dem Bauteil in einen verkantungsfreien Bereich der Scheibe zustellbar ist.

Vorteilhafte Weiterbildungen beider Einrichtungen sind den gegenständlichen Unteransprüchen zu entnehmen.

Das erfindungsgemäße Konzept beruht darauf, daß über eine Meßspindel, deren Gewinde sich entweder im schraubenartigen Bauteil oder aber in der Radnabe befindet, das sich durch den Verschleiß der Reibbeläge vergrößernde Luftspiel der jeweiligen Lamellenbremse, welches dem Kolbenhub entspricht, gemessen wird. Bei beiden Varianten wird der axiale Abstand zwischen der Radnabe und der Stützscheibe einmal bei betätigter Bremse (Kolben ausgefahren) und anschließend bei gelöster Bremse festgestellt. Die Differenz der Maße ergibt das Luftspiel in der Bremse. Durch Subtraktion des Grundluftspiels bei der Montage der Bremse kann der Summenverschleiß des Bremspaketes über einen vorgegebenen Zeitraum problemlos ermittelt werden. Die Prüfung der Bremsbeläge wird im Stillstand des jeweiligen Fahrzeuges durchgeführt.

Zur Messung wird die ggf. bereits vorhandene Verschlußschraube im Bereich der jeweiligen Radnabe entfernt und die Meßeinrichtung eingedreht. Die Bremse wird betätigt und in dieser Position belassen. Dadurch ist der Ringkolben ausgefahren und das Bremspaket wird gegen die Stützscheibe gedrückt. Die Spindel wird nun solange eingedreht, bis sie an der Stützscheibe anschlägt. Diese Position wird dokumentiert. Anschließend wird die Bremse gelöst und die Federn holen den Ringkolben in seine Ausgangsposition zurück. Die Spindel kann nun ebenfalls nachgedreht werden, bis sie wiederum an der Stützscheibe anschlägt. Der Spindelweg zwischen dem ersten und zweiten Anschlag entspricht dem Kolbenhub und somit dem in der Bremse vorhandenen Luftspiel.

Vorzugsweise wird der Verschleiß im Verlauf der ohnehin gegebenen Wartungsintervalle ermittelt. Die Erfindung findet Anwendung bei LKW, wie z.B. Muldenkippern, mobilen Bau- und Arbeitsmaschinen, wie z.B. Radladern, Baggern, Gradern oder dgl.

Die Erfindung ist anhand eines Ausführungsbeispieles in der Zeichnung dargestellt und wird wie folgt beschrieben. Es zeigen:
- Figur 1 -: Teilansicht einer Lamellenbremse samt Meßeinrichtung
- Figur 2 -: Querschnitt durch die Meßeinrichtung
- Figur 3 -: Teildarstellung der Anzeige der Meßeinrichtung gemäß Figur 2
- Figur 4 -: Teilansicht der Lamellenbremse gemäß Figur 1 samt alternativer Meßeinrichtung

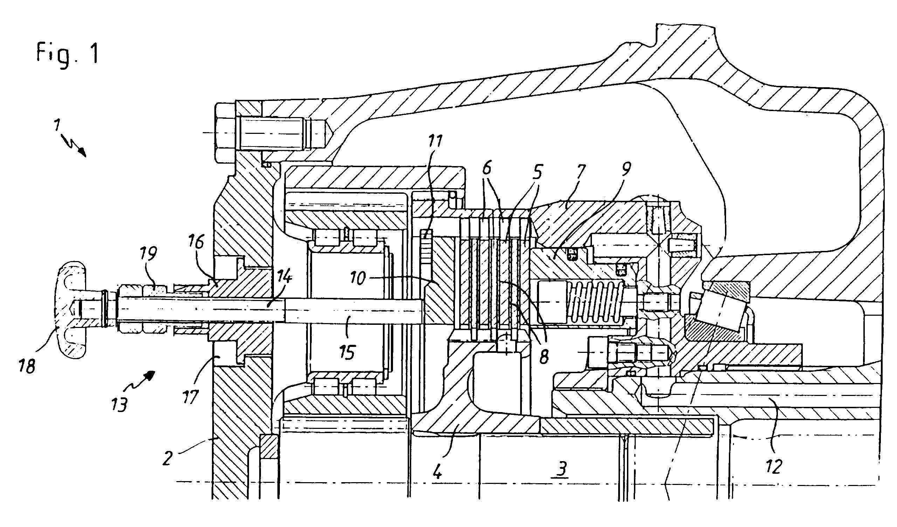

Figur 1 zeigt als Teilansicht eine Lamellenbremse 1, die als wesentliche Bestandteile eine Radnabe 2 beinhaltet, innerhalb welcher eine Antriebswelle 3 angeordnet ist. Auf einem Lamellenträger 4, der auf der Antriebswelle 3 gelagert ist, sind Innenlamellen 5 befestigt. Der Lamellenträger 4 wird von einem Außenlamellen 6 tragenden Hohlradträger 7 umgeben, wobei die Außenlamellen 6 zwischen den Innenlamellen 5 angeordnet sind. Die Reibbeläge der einzelnen Lamellen 5,6 sind hierbei der Einfachheit halber mit dem Bezugszeichen 8 versehen. Axial hinter den Lamellen 5,6 ist ein Ringkolben 9 angeordnet, der innerhalb des Hohlradträgers 7 in Richtung der Lamellen 5,6 zustellbar ist, und diese bei Betätigung der Bremse axial in Richtung einer Stützscheibe 10 bewegt, die mittels eines Sicherungsringes 11 gegen Verrutschen innerhalb des Hohlradträgers 7 gehalten ist. Der Ringkolben 9 wird über die Druckleitung 12 beim Betätigen der Bremse mit Hydrauliköl beaufschlagt.

Um nun den Verschleiß der Reibbeläge 8 ermitteln zu können, wird eine Meßeinrichtung 13 zur Anwendung gebracht, die eine Spindel 14 mit austauschbaren Einsatzstiften 15 beinhaltet. Die Spindel 14 wird von einem schraubenartigen Bauteil 16 umgeben, die anstelle einer hier nicht weiter dargestellten Öleinfüllschraube in die zugehörige Bohrung 17 der Radnabe 2 eingebracht wird. Die Spindel 14 ist außerhalb der Radnabe 2 mit einem Griff 18 versehen, mittels welchem sie in Richtung der Stützscheibe 10 zugestellt werden kann. Die Meßeinrichtung 13 beinhaltet eine Anzeige 19 für die ermittelten Meßwerte, die in den folgenden Figuren näher beschrieben wird.

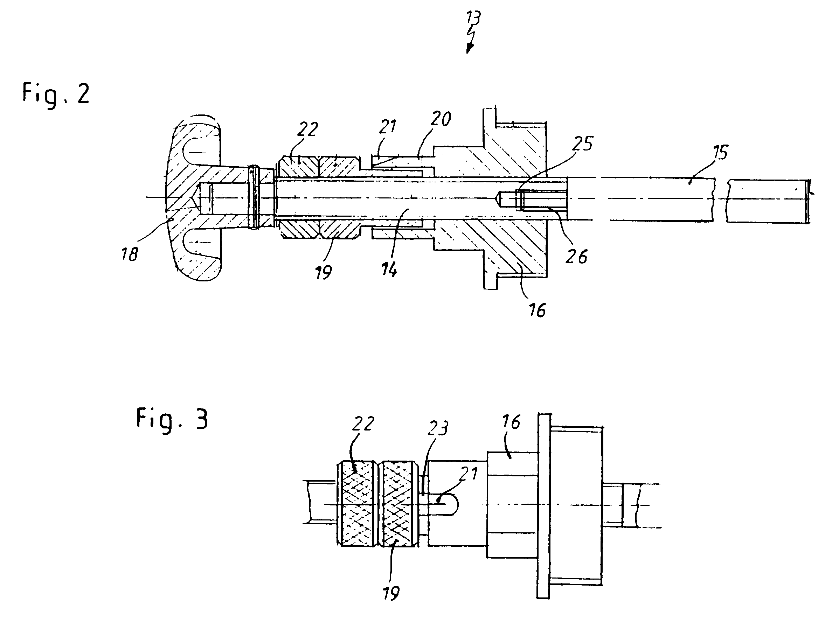

Figur 2 zeigt die erfindungsgemäße Meßeinrichtung 13, die im wesentlichen folgende Bauteile beinhaltet:
eine Spindel 14 mit einer Steigung p = 1, ein schraubenartiges Bauteil 16 mit konzentrischer Bohrung 25, einem austauschbaren Einsatzstift 15 samt Gewinde 26, der in die Spindel 14 geschraubt ist sowie einen als Sterngriff ausgebildeten Griff 18 zur Verstellung der Spindel 14 innerhalb des Bauteils 16. Zwischen dem Griff 18 und dem Bauteil 16 ist die durch eine Skalentrommel 19 gebildete Anzeige vorgesehen, die in Richtung des Bauteiles 16 bewegbar ist. Das Bauteil 16 ist mit einem axialen Ansatz 20 versehen, der skalentrommelseitig eine Markierung 21 aufweist, die nach Art eines Mikrometers mit der Einteilung auf der Skalentrommel 19 in Übereinstimmung gebracht werden kann. Um Verfälschungen der Meßergebnisse zu vermeiden, ist axial hinter der Skalentrommel 19 eine Rändelmutter 22 vorgesehen, die als Kontermutter eingesetzt werden kann.

Figur 3 zeigt eine Teildarstellung der Anzeige, nämlich das Bauteil 16, die Skalentrommel 19 sowie die Rändelmutter 22. Ferner erkennbar ist die Markierung 21 sowie die Skalierung 23 auf der Skalentrommel 19.

Der Meßvorgang stellt sich etwa wie folgt dar: Die hier nicht weiter dargestellte Öleinfüllschraube wird durch das die Meßeinrichtung 13 beinhaltende Bauteil 16 ersetzt. Die Bremse wird getreten, so daß die Lamellen 5,6 auf die Stützscheibe 10 zugestellt werden. Mittels des Griffes 18 wird die mit dem jeweiligen Einsatzstift 15 verbundene Spindel 14 solange in Richtung der Stützscheibe 10 zugestellt, bis der Einsatzstift 15 an der Stirnfläche 24 der Stützscheibe 10 in einem verkantungsfreien Bereich (möglichst weit radial innen) zur Anlage kommt. Der erste Meßvorgang findet bei getretener Bremse statt. Ist dieser erste Meßwert an der Skalentrommel 19 fixiert worden, wird die Bremse gelöst und die Spindel 14 mittels des Griffes 18 solange in Richtung der Stützscheibe 10 nachgestellt, bis diese wiederum zur Anlage an der Stützscheibe 10 kommt. Der zweite Meßwert abzüglich des ersten, der unmittelbar an der Skalentrommel 19 abgelesen werden kann, ergibt den Kolbenhub sowie den daraus resultierenden summenmäßigen Verschleiß der Reibbeläge 8.

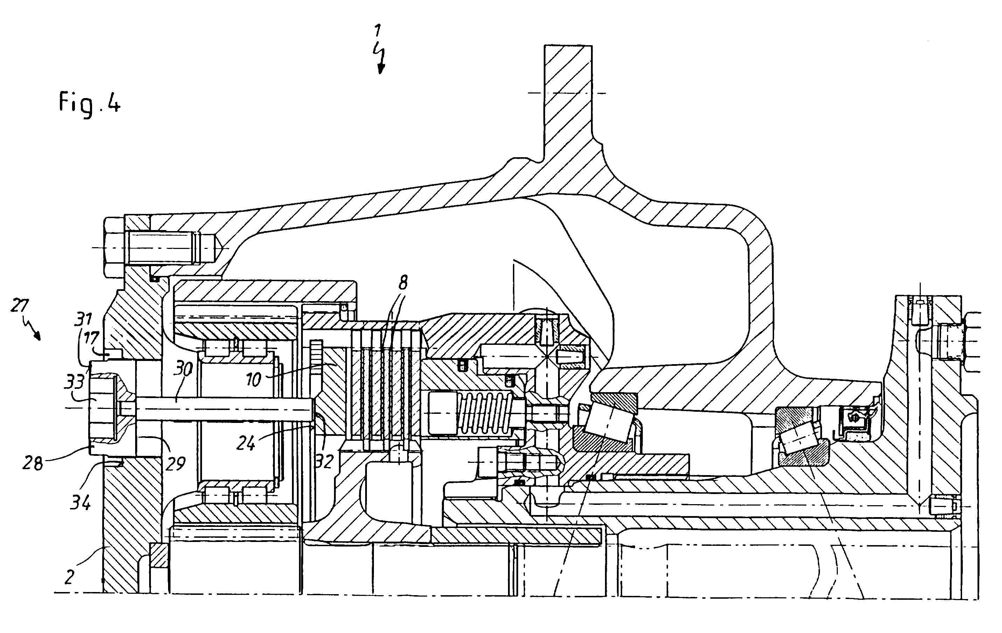

Figur 4 zeigt ebenfalls als Teilansicht die bereits in Figur 1 dargestellte Lamellenbremse 1. Da der Aufbau identisch ist, werden auch die gleichen Bezugszeichen verwendet. Unterschiedlich zu Figur 1 ist die Art der Meßeinrichtung 27, die in diesem Beispiel verwendet wird. Die Meßeinrichtung 27 besteht aus einem schraubenartigen Bauteil 28, das gleichzeitig die Spindel bildet, die im Bereich ihrer der Stützscheibe 10 zugewandten Stirnfläche 29 mit einem Stift 30 fest verbunden ist. Das Bauteil 28 ist im Bereich seiner anderen Stirnfläche 31 bundfrei ausgeführt, d.h. weist keinerlei Radialansätze, wie das Bauteil 16 gemäß Figur 1, auf, die sich an entsprechenden Gegenflächen abstützen. Der Stift 30 ist hierbei stützscheibenseitig mit einer kugeligen Stirnfläche 32 versehen, die beim Eindrehen des Bauteils 28 in die Bohrung 17 an der Stirnfläche 24 der Stützscheibe 10 zur Anlage kommt.

Der Meßvorgang stellt sich hierbei ähnlich, wie bereits vorab geschildert, dar:

Zu Beginn der Messung wird die Radnabe 2 so gedreht, daß die Verschlußschraube, die die Meßbohrung 17 während des Betriebes verschließt, nach oben gedreht wird, damit beim Herausdrehen derselben kein Öl herausläuft. Die Verschlußschraube wird anschließend herausgedreht und das die Meßeinrichtung 27 bildende Bauteil 28 wird zwei bis drei Gewindegänge eingedreht. Das Bauteil 28 weist analog zur Verschlußschraube einen Innensechskant 33 auf und kann mit dem gleichen Innensechskantschlüssel eingedreht werden, mit dem zuvor die Verschlußschraube herausgeschraubt wurde.

Nun wird die Bremse betätigt und das Bremspedal gedrückt belassen. Das Bauteil 28 wird handfest eingeschraubt bis die Stirnfläche 32 des Stiftes 30 an der Stirnfläche 24 der Stützscheibe 10 zur Anlage kommt. Anschließend wird mit dem Tiefenmaß eines hier nicht dargestellten Meßschiebers das Maß zwischen der Stirnseite 31 des Bauteiles 28 und der Stirnfläche 34 der Flachsenkung im Bereich der Bohrung 17 festgestellt. Die Bremse wird danach gelöst und das Bauteil 28 weiter eingedreht, bis der Stift 30 wiederum an der Stützscheibe 10 anschlägt. Durch erneutes Messen und die Subtraktion der beiden Maße kann ein für den Verschleiß in der Radnabe 2 charakteristisches Maß ermittelt werden. Durch Vergleich mit einem Grenzmaß steht dann fest, ob die Reibbeläge 8 und somit die Innenlamellen 5 ausgetauscht werden müssen.

## Patentansprüche

1. Verfahren zur Verschleißmessung an naßlaufenden Lamellenbremsen (1) von Achsen mit Planetenradvorgelegen, indem ein in eine vorgegebene Bohrung (17) in der Radnabe (2) angeordnetes Verschlußelement durch ein mit einer Meßeinrichtung (13,27) zusammenwirkendes schraubenartiges Bauteil (16,28) ersetzt wird, gekennzeichnet durch eine mit der Meßeinrichtung (13,27) zusammenwirkende Spindel (14,28), die nach dem Betätigen der Bremse ohne weitere Drehung der Radnabe (2) bis zur die Lamellen (5,6) axial abstützenden Scheibe (10) zugestellt und dieser Abstand als erster Meßwert festgestellt wird, und anschließend die Bremse wieder gelöst und die Spindel (14,28) solange weiter zugestellt wird, bis sie erneut an der Scheibe (10) zur Anlage kommt und dieser Abstand als zweiter Meßwert festgestellt wird, wobei die Differenz der beiden Meßwerte den Kolbenhub ergibt, aus welchem der Verschleiß ermittelt wird.

2. Verfahren nach Anspruch 1, dadurch gekennzeichnet, daß der Kolbenhub unmittelbar an der Spindel (14) abgelesen wird.

3. Verfahren nach Anspruch 1, dadurch gekennzeichnet, daß der Kolbenhub durch das Tiefenmaß eines Meßschiebers ermittelt wird.

4. Einrichtung zur Durchführung des Verfahrens nach den Ansprüchen 1 und 2, dadurch gekennzeichnet, daß die Spindel (14) konzentrisch innerhalb des schraubenartigen Bauteils (16) axial beweglich geführt ist, eine vorgegebene Gewindesteigung aufweist und in einen verkantungsfreien Bereich (24) der Scheibe (10) zustellbar ist.

5. Einrichtung zur Durchführung des Verfahrens nach den Ansprüchen 1 und 3, dadurch gekennzeichnet, daß die Spindel durch das schraubenartige Bauteil (28) gebildet ist, die an ihrem der Scheibe (10) zugewandten Ende mit einem konzentrisch angeordneten Stift (30) zusammenwirkt, der zusammen mit dem Bauteil (28) in einem verkantungsfreien Bereich (24) der Scheibe (10) zustellbar ist.

6. Einrichtung nach Anspruch 4, dadurch gekennzeichnet, daß die Spindel (14) scheibenseitig mit austauschbaren Einsatzstiften (15) bestückbar ist.

7. Einrichtung nach den Ansprüchen 4 und 6 dadurch gekennzeichnet, daß die Gewindesteigung der Spindel (14) p = 1 mm beträgt.

8. Einrichtung nach Anspruch 7, dadurch gekennzeichnet, daß die Spindel (14) bzw. deren jeweiliger Einsatzstift (15) in den radial inneren Bereich (24) der Scheibe (10) zustellbar ist.

9. Einrichtung nach den Ansprüchen 7 und 8, dadurch gekennzeichnet, daß die Spindel (14) außerhalb der Radnabe (2) mit einem Griff (18) versehen ist.

10. Einrichtung nach den Ansprüchen 7 bis 9, dadurch gekennzeichnet, daß axial zwischen dem Griff (18) und dem Bauteil (16) eine Anzeige (19) angeordnet ist.

11. Einrichtung nach den Ansprüchen 7 bis 10, dadurch gekennzeichnet, daß die Anzeige (19) als eine die Spindel (14) umgebende Skalentrommel ausgebildet ist, die in Richtung des Bauteils (16) zustellbar ist.

12. Einrichtung nach den Ansprüchen 7 bis 11, dadurch gekennzeichnet, daß das Bauteil (16) skalentrommelseitig mit mindestens einer Markierung (21) versehen ist.

13. Einrichtung nach den Ansprüchen 7 bis 12, gekennzeichnet durch eine als Rändelmutter (22) ausgebildete Kontermutter für die Skalentrommel (19).

14. Einrichtung nach den Ansprüchen 7 bis 13, dadurch gekennzeichnet, daß der jeweilige Einsatzstift (15) scheibenseitig abgerundet ausgebildet ist.

15. Einrichtung nach Anspruch 5, dadurch gekennzeichnet, daß das Bauteil (28) bundfrei ausgeführt ist.

16. Einrichtung nach Anspruch 15, dadurch gekennzeichnet, daß der Stift (30) fest mit dem Bauteil (28) verbunden ist.

17. Einrichtung nach den Ansprüchen 15 und 16, dadurch gekennzeichnet, daß der Stift (30) scheibenseitig eine abgerundete Stirnfläche (32) aufweist.

18. Einrichtung nach einem der Ansprüche 4 bis 17, dadurch gekennzeichnet, daß das Bauteil (16,28) in die Bohrung (17) der öleinfüllschraube einsetzbar ist.

## Claims

1. Method for measuring the wear on wet-running multiple disk brakes (1) of axles with planetary intermediate gearing, in which a closure element, arranged in a bore (17) already provided in the wheel hub (2), is replaced by means of a screw-like component (16, 28) cooperating with a measuring arrangement (13, 27), characterized by a spindle (14, 28) which co-operates with the measuring arrangement (13, 27) and which, after actuation of the brake, without further rotation of the wheel hub (2), is advanced as far as the disk (10) axially supporting the plates (5, 6), and this distance is determined as a first measured value, then the brake is released again and the spindle (14, 28) is advanced further until it again comes to bear against the disk (10), and this distance is determined as a second measured value, the difference between the two measured values providing the piston stroke from which the wear is ascertained.

2. Method according to Claim 1, characterized in that the piston stroke is read off directly at the spindle (14).

3. Method according to Claim 1, characterized in that the piston stroke is ascertained by means of the depth measurement of a measuring slider.

4. Arrangement for the execution of the method according to Claims 1 and 2, characterized in that the spindle (14) is guided so as to be axially movable concentrically within the screw-like component (16), has a predetermined thread pitch, and is arranged to be advanced into a tilt-free region (24) of the disk (10).

5. Arrangement for the execution of the method according to Claims 1 and 3, characterized in that the spindle is formed by means of the screw-like component (28), which at its end facing towards the disk (10) co-operates with a concentrically arranged pin (30) which can be advanced, together with the component (28), in a tilt-free region (24) of the disk (10).

6. Arrangement according to Claim 4, characterized in that the spindle (14) can be provided on the end towards the disk with exchangeable insertion pins (15).

7. Arrangement according to Claims 4 and 6, characterized in that the thread pitch of the spindle (14) p = 1 mm.

8. Arrangement according to Claim 7, characterized in that the spindle (14) or its respective insertion pin (15) is arranged to be advanced into the radially inner region (24) of the disk (10).

9. Arrangement according to Claims 7 and 8, characterized in that the spindle (14) is provided outside the wheel hub (2) with a handle (18).

10. Arrangement according to Claims 7 to 9, characterized in that a read-out (19) is arranged axially between the handle (18) and the component (16).

11. Arrangement according to Claims 7 to 10, characterized in that the read-out (19) is in the form of a scale drum which surrounds the spindle (14) and which can be advanced in the direction of the component (16).

12. Arrangement according to Claims 7 to 11, characterized in that the component (16) is provided on the same side as the scale drum with at least one marking (21).

13. Arrangement according to Claims 7 to 12, characterized by a lock-nut, in the form of a knurled nut (22), for the scale drum (19).

14. Arrangement according to Claims 7 to 13, characterized in that the respective insertion pin (15) is rounded on the end towards the disk.

15. Arrangement according to Claim 5, characterized in that the component (28) is collarless.

16. Arrangement according to Claim 15, characterized in that the pin (30) is rigidly connected to the component (28).

17. Arrangement according to Claims 15 and 16, characterized in that the pin (30) has a rounded end face (32) on the end towards the disk.

18. Arrangement according to one of Claims 4 to 17, characterized in that the component (16, 28) is arranged to be inserted into the bore (17) for the oil fill screw.

## Revendications

1. Procédé pour mesurer l'usure de freins à disques multiples (1), fonctionnant à l'état humide, d'essieux comportant des transmissions de renvoi à engrenages planétaires, selon lequel un élément d'usure disposé dans un perçage prédéterminé (17) ménagé dans le moyeu de roue (2) est remplacé par un composant en forme de vis (16,28), qui coopère avec un dispositif de mesure (13,27), caractérisé par une broche (14,28), qui coopère avec le dispositif de mesure (13,27) et qui, après l'actionnement du frein, sans rotation supplémentaire du moyeu de roue (2), avance jusqu'au disque (10) qui supporte axialement les disques multiples (5,6), et cette distance est fixée en tant que première valeur de mesure, et ensuite on serre à nouveau le frein et la broche (14,28) avance de façon supplémentaire jusqu'à ce qu'elle vienne s'appliquer à nouveau contre le disque (10), et cette distance est fixée en tant que seconde valeur de mesure, la différence entre les deux valeurs de mesure représentant la course du piston, à partir de laquelle est déterminée l'usure.

2. Procédé selon la revendication 1, caractérisé en ce que la course du piston est lue directement sur la broche (14).

3. Procédé selon la revendication 1, caractérisé en ce que la course du piston est déterminée par la cote de profondeur d'un calibre à coulisse.

4. Dispositif pour la mise en oeuvre du procédé selon les revendications 1 et 2, caractérisé en ce que la broche (14) est guidée de manière à être déplaçable axialement concentriquement à l'intérieur du composant en forme de vis (16), possède un pas de filetage prédéterminé et peut être avancée dans une zone sans coincement (24) du disque (10).

5. Dispositif pour la mise en oeuvre du procédé selon les revendications 1 et 3, caractérisé en ce que la broche est formée par le composant en forme de vis (28), qui coopère, au niveau de son extrémité tournée vers le disque (10), avec une broche (30) disposée concentriquement et qui peut avancer conjointement avec le composant (28) dans une zone sans coincement (24) du disque (10).

6. Dispositif selon la revendication 4, caractérisé en ce que la broche (14) est équipée, du côté du disque, de tiges d'insertion remplaçables (15).

7. Dispositif selon les revendications 4 et 6, caractérisé en ce que le pas du filetage de la broche (14) est p = 1 mm.

8. Dispositif selon la revendication 7, caractérisé en ce que la broche (14) ou sa tige respective d'insertion (15) peut être avancée dans la zone (24), intérieure du point de vue radial, du disque (10).

9. Dispositif selon les revendications 7 et 8, caractérisé en ce que la broche (14) comporte, à l'extérieur du moyeu de roue (2), une poignée (18).

10. Dispositif selon les revendications 7 à 9, caractérisé en ce qu'un dispositif indicateur (19) est disposé axialement entre la poignée (18) et le composant (16).

11. Dispositif selon les revendications 7 à 10, caractérisé en ce que le dispositif indicateur (19) est agencé sous la forme d'un tambour gradué qui entoure la broche (14) et que l'on peut faire avancer en direction du composant (16).

12. Dispositif selon les revendications 7 à 11, caractérisé en ce que le composant (16) comporte, du côté du tambour gradué, au moins un repère (21).

13. Dispositif selon les revendications 7 à 12, caractérisé par un contre-écrou, agencé en tant qu'écrou moleté (22), pour le tambour gradué (19).

14. Dispositif selon les revendications 7 à 13, caractérisé en ce que la tige d'insertion respective (15) est agencée avec une forme arrondie du côté du disque.

15. Dispositif selon la revendication 5, caractérisé en ce que le composant (28) est agencé sans collet.

16. Dispositif selon la revendication 15, caractérisé en ce que la tige (30) est reliée de façon fixe au composant (28).

17. Dispositif selon les revendications 15 et 16, caractérisé en ce que la tige (30) possède, du côté du disque, une surface frontale arrondie (32).

18. Dispositif selon l'une des revendications 4 à 17, caractérisé en ce que le composant (16,28) peut être inséré dans le perçage (17) de la vis de remplissage d'huile.
